# EUROPÄISCHE PATENTANMELDUNG

(11) **EP 2 570 696 A2**
(43) Veröffentlichungstag der Anmeldung: **20.03.2013**
(21) Anmeldenummer: 12183724.9
(22) Anmeldetag: 10.09.2012
(51) Int. Cl.: F16F 7/06

(54) **Rotationsdämpfer mit Freilauf**

(30) Priorität: 16.09.2011 DE 102011113617
(71) Anmelder: Hörauf & Kohler Verwaltungs KG, 86850 Fischach (DE)
(72) Erfinder: Schiele, Günter, 86156 Augsburg (DE); Kohler, Dieter, 86179 Augsburg (DE)
(74) Vertreter: Charrier, Rapp & Liebau

(57) **Zusammenfassung**

Die Erfindung betrifft einen Rotationsdämpfer mit Freilauf, umfassend ein Gehäuse (1) mit einer Innenfläche (1a), einen im Gehäuse drehbar angeordneten Rotor (2) und wenigstens ein Bremselement (3), welches bei einer Drehung des Rotors (2) in einer ersten Rotationsrichtung in Anlage an die Innenfläche (1a) des Gehäuses (1) kommt um ein auf den Rotor (2) wirkendes Bremsmoment zu erzeugen und bei einer Drehung des Rotors (2) in der entgegengesetzten Rotationsrichtung in eine Freilaufstellung gebracht wird, in der sich der Rotor (2) im Wesentlichen ohne Einwirkung eines Bremsmoments frei drehen kann. Die der Erfindung zugrundeliegende Aufgabe, einen solchen Rotationsdämpfer so weiter zu bilden, dass er einen möglichst einfachen Aufbau aufweist und einfach zu montieren ist und gleichzeitig im Einsatz möglichst laufruhig und geräuscharm ist und ein weitgehend temperaturunabhängiges Bremsmoment erzeugt, wird dadurch gelöst, dass das oder jedes Bremselement (3) auf oder an einer drehbar im Gehäuse (1) angeordneten Steuerscheibe (4) beweglich gelagert oder angeordnet ist und bei einer Drehung des Rotors (2) in der ersten Rotationsrichtung von diesem zur Erzeugung des Bremsmoments gegen die Innenfläche (1a) des Gehäuses (1) gepresst wird.

## Beschreibung

Die Erfindung betrifft einen Rotationsdämpfer mit Freilauf nach dem Oberbegriff des Anspruchs 1.

Ein gattungsgemäßer Rotationsdämpfer ist aus der DE 4209821 A1 bekannt. Darin ist ein Drehdämpfer beschrieben, der ein tellerförmiges Gehäuse mit einer kreisförmigen Vertiefung aufweist, in der ein Rotor mit einem daran befestigten Drehteil angeordnet ist, wobei der Rotor mit dem daran befestigten Drehteil drehbar innerhalb der kreisförmigen Vertiefung gelagert ist. Der Rotor umfasst einen sich von dem Drehteil erhebenden Schaft. Dieser ist mit einem in seiner Bewegung zu dämpfenden Dreh- oder Gleitteil, beispielsweise der Abdeckung eines Handschuhfaches oder eines beweglichen Aschenbechers in einem Kraftfahrzeug verbunden, um die Drehbewegung des Dreh- oder Gleitteils aufzunehmen. Zur Dämpfung der Bewegung des Dreh- oder Gleitteils ist in der kreisförmigen Vertiefung des Gehäuses ein ringförmiges elastisches Teil entlang dem Innenumfang der kreisförmigen Vertiefung angeordnet. Am äußeren Umfang des Drehteils des Rotors sind Einkerbungen vorgesehen, in denen Kugeln bzw. Rollen gelagert sind, die sich bei einer Drehung des Rotors in den Umfang des ringförmigen elastischen Teils eindrücken, wodurch die Drehung des Rotors gedämpft und die Bewegung des an dem Schaft des Rotors befestigten Dreh- oder Gleitteils gedämpft wird. In einer Ausführungsform dieses Drehdämpfers ist vorgesehen, dass die Dämpfung der Drehbewegung des Rotors innerhalb des Gehäuses nur in einer Drehrichtung erfolgt, der Rotor in der entgegengesetzten Drehrichtung jedoch frei rotieren kann. Dieser bekannte Drehdämpfer erzeugt damit bei einer Drehung des Rotors in einer ersten Drehrichtung ein Bremsmoment und weist bei einer Drehung des Rotors in der entgegengesetzten Rotationsrichtung einen Freilauf auf.

Dieser bekannte Rotationsdämpfer erweist sich im praktischen Gebrauch als unzuverlässig und bei der Herstellung und der Montage als sehr aufwändig. Insbesondere das Einsetzen der Kugeln bzw. Rollen in die Einkerbungen des am Rotor befestigten Drehteils erweist sich als zeitaufwändig und erfordert einiges Geschick bei der Montage dieses Rotationsdämpfers.

Aus der EP1344985-A ist eine Einwegbremsvorrichtung bekannt, welche einen Rotationsdämpfer umfasst, bei der in einer ersten Rotationsrichtung des Rotationsdämpfers ein Bremsmoment erzeugt und in der entgegengesetzten Rotationsrichtung ein Freilauf vorhanden ist. Bei dem Rotationsdämpfer handelt es sich um einen Fluid-Dämpfer mit einem Gehäuse, in dem sich ein viskoses Fluid, wie zum Beispiel Silikonöl, befindet. Innerhalb des Gehäuses ist ein Bremsrotor drehbar gelagert. Bei einer Drehung des Rotors wird durch das viskose Fluid ein Widerstand erzeugt, der sich als Bremsmoment bemerkbar macht. Über eine aus dem Gehäuse herausgeführt Welle, welche über ein Zahnrad an eine Zahnstange oder ein Zahnsegment gekoppelt ist, kann der Rotationsdämpfer mit einem in seiner Bewegung zu bremsenden Dreh- oder Gleitteil, beispielsweise einem Handschuhfachdeckel in einem Kraftfahrzeug, verbunden werden. Bei der Einwegbremsvorrichtung der EP1344958-A wird ein Freilauf der Bremsvorrichtung zwischen dem Gehäuse des Rotationsdämpfers und einem weiteren Gehäuse, welches den Rotationsdämpfer aufnimmt, erzeugt. Der Rotationsdämpfer ist dabei in einer Kammer des weiteren Gehäuses schwimmend gelagert und zwischen dem Umfang des Gehäuses des Rotationsdämpfers und einem Abschnitt der Innenwandung der den Rotationsdämpfer aufnehmenden Kammer wird eine formschlüssige Kopplung erzeugt, wenn sich der Rotationsdämpfer in einer ersten Rotationsrichtung dreht. In der entgegengesetzten Rotationsrichtung ist die Kopplung zwischen dem Gehäuse des Rotationsdämpfers und dem Innenumfang der Kammer des weiteren Gehäuses aufgehoben, so dass sich der Rotationsdämpfer in der entgegengesetzten Rotationsrichtung frei in dem weiteren Gehäuse ohne Einwirkung eines Bremsmoments drehen kann.

Auch diese Einwegbremsvorrichtung erweist sich im Aufbau und bei der Montage als aufwändig. Darüber hinaus erweist sich diese Einwegbremsvorrichtung durch die Verwendung eines Fluid-Rotationsdämpfers als nachteilig, weil das Bremsmoment aufgrund der Temperaturabhängigkeit der Viskosität des dämpfenden Fluids stark von der Umgebungstemperatur abhängt. Dies kann insbesondere bei Anwendung in Kraftfahrzeugen Probleme verursachen, da dort hohe Temperaturunterschiede auftreten können. Durch die formschlüssige Kopplung des Gehäuses des Rotationsdämpfers mit dem weiteren Gehäuse, welche insbesondere als Zahnung ausgebildet sein kann, kommt es darüber hinaus zu unerwünschten Geräuschentwicklungen.

Hiervon ausgehend liegt der Erfindung die Aufgabe zu Grunde, einen Rotationsdämpfer mit Freilauf bereit zu stellen, der einen möglichst einfachen Aufbau aufweist und möglichst einfach zu montieren ist und gleichzeitig im Einsatz möglichst laufruhig und geräuscharm ist und ein weitgehend temperaturunabhängiges Bremsmoment erzeugt.

Diese Aufgaben werden mit einem Rotationsdämpfer mit den Merkmalen des Anspruchs 1 gelöst. Bevorzugte Ausführungsformen dieses Rotationsdämpfers sind den abhängigen Ansprüchen zu entnehmen.

Der erfindungsgemäße Rotationsdämpfer umfasst ein Gehäuse, welches zweckmäßig eine zylindrische Gehäusewand aufweist. In dem Gehäuse ist ein Rotor drehbar angeordnet. Innerhalb des Gehäuses befindet sich weiterhin ein Bremselement, welches bei einer Drehung des Rotors in einer ersten Rotationsrichtung in Anlage an eine Innenfläche des Gehäuses kommt, insbesondere dem Innenumfang der zylindrischen Gehäusewand, und dadurch ein auf den Rotor wirkendes Bremsmoment erzeugt. Bei einer Drehung des Rotors in der entgegengesetzten Rotationsrichtung wird das oder jedes Bremselement in eine Freilaufstellung gebracht, in der sich der Rotor im Wesentlichen ohne die Einwirkung eines Bremsmoments frei drehen kann. Bei dem erfindungsgemäßen Rotationsdämpfer ist das oder jedes Bremselement auf oder an einer drehbar im Gehäuse angeordneten Steuerscheibe beweglich gelagert bzw. angeordnet. Bei einer Drehung des Rotors in der ersten Rotationsrichtung wird das oder jedes Bremselement zur Erzeugung des Bremsmoments von dem Rotor gegen die Innenfläche des Gehäuses gepresst.

Der Rotor ist dabei in einem Ausführungsbeispiel der Erfindung in oder an der Steuerscheibe drehbar gelagert. An der Steuerscheibe ist bevorzugt ein Anschlag zur Begrenzung der Drehbewegung des Rotors gegenüber der Steuerscheibe vorgesehen. Bei einer Drehung des Rotors in der entgegengesetzten Rotationsrichtung (Freilaufrichtung) schlägt der Rotor am Anschlag an. Dabei wird das oder jedes Bremselement in seine Freilaufstellung gebracht, in der es außer Eingriff mit der Innenfläche des Gehäuses steht.

In einem ersten Ausführungsbeispiel sind die Bremselemente des erfindungsgemäßen Bewegungsdämpfers drehbar um eine Drehachse auf der Steuerscheibe gelagert. In einem weiteren Ausführungsbeispiel der Erfindung sind die Bremselemente federelastisch an der Steuerscheibe angelenkt oder einstückig elastisch angeformt und dadurch elastisch gegenüber der Steuerscheibe beweglich ausgebildet. Bei diesem Ausführungsbeispiel wird die Bewegung der Bremselemente von ihrer Dämpfungsstellung in ihre Freilaufstellung von der Rückstellkraft der federelastischen Verbindung der Bremselemente an der Steuerscheibe bewirkt. Diese federelastische Verbindung kann zweckmäßig durch ein Filmscharnier gestaltet sein.

In einer weiteren Ausführungsform der Erfindung ist vorgesehen, dass die Bremselemente in radialer Richtung frei beweglich an oder auf der Steuerscheibe schwimmend gelagert sind.

Damit der Rotor die Bremselemente bei einer Drehung des Rotors in der ersten Rotationsrichtung in ihre Dämpfungsstellung bringen kann, ist an dem Rotor zweckmäßig wenigstens ein Exzenter angeformt, der ein Bremselement bei Drehung des Rotors in der ersten Rotationsrichtung gegen die Innenfläche des Gehäuses presst, um dadurch das Bremsmoment zu erzeugen.

Bevorzugt weißt jedes Bremselement eine aus einem Weichkunststoff gebildete Bremsfläche auf. Alternativ dazu oder auch ergänzend kann die Innenfläche des Gehäuses aus einem Weichkunststoff gebildet oder mit einem Überzug aus Weichkunststoff versehen sein, um ein möglichst hohes Bremsmoment bei der Drehung des Rotors in der ersten Rotationsrichtung zu erzeugen, bei der die Bremsfläche jedes Bremselements gegen die Innenfläche des Gehäuses gepresst wird.

In bevorzugten Ausführungsformen der Erfindung ist vorgesehen, dass sich jedes Bremselement bei einer Drehung des Rotors in der ersten Rotationsrichtung in einer Dämpfungsstellung befindet, in der Bremselemente in Kontakt mit der Innenfläche des Gehäuses stehen und dass die Bremselemente bei Drehung des Rotors in der entgegengesetzten Rotationsrichtung selbsttätig in ihre Freilaufstellung verschoben werden, in der die Bremselemente außer Eingriff mit der Innenfläche des Gehäuses stehen.

Diese und weitere Merkmale sowie Vorteile der Erfindung gehen aus den nachfolgend unter Bezugnahme auf die begleitenden Zeichnungen beschriebenen Ausführungsbeispielen hervor. Die Zeichnungen zeigen:
- **Figur 1:**: Perspektivische Darstellung eines ersten Ausführungsbeispiels des erfindungsgemäßen Rotationsdämpfers, wobei Figur 1a den Rotationsdämpfer in einer ersten perspektivischen Ansicht zeigt und Figur 1b den Rotationsdämpfer in einer perspektivischen Ansicht mit einem im Aufriss dargestellten Gehäuse und abgenommenem Gehäusedeckel zeigt;
- **Figur 2:**: Draufsichten auf den Rotationsdämpfer von Figur 1 bei abgenommenem Gehäusedeckel, wobei Figur 2a eine Draufsicht auf den Rotationsdämpfer in einer ersten Stellung (Freilaufstellung) und Figur 2b eine Draufsicht auf den Rotationsdämpfer in zweiten Stellung (Dämpfungsstellung) zeigt;
- **Figur 3:**: Perspektivische Darstellung eines zweites Ausführungsbeispiels des erfindungsgemäßen Rotationsdämpfers mit einem im Aufriss dargestellten Gehäuse und abgenommenem Gehäusedeckel;
- **Figur 4:**: Draufsichten auf den Rotationsdämpfer von Figur 3 bei abgenommenem Gehäusedeckel, wobei Figur 4a eine Draufsicht auf den Rotationsdämpfer in einer ersten Stellung (Freilaufstellung) und Figur 4b eine Draufsicht auf den Rotationsdämpfer in zweiten Stellung (Dämpfungsstellung) zeigt;
- **Figur 5:**: Perspektivische Darstellung eines drittes Ausführungsbeispiels des erfindungsgemäßen Rotationsdämpfers, wobei Figur 5a den Rotationsdämpfer in einer ersten perspektivischen Ansicht zeigt und Figur 5b den Rotationsdämpfer in einer perspektivischen Ansicht mit einem im Aufriss dargestellten Gehäuse und abgenommenem Gehäusedeckel zeigt;
- **Figur 6:**: Draufsichten auf den Rotationsdämpfer von Figur 5 bei abgenommen Gehäusedeckel, wobei Figur 6a eine Draufsicht des Rotationsdämpfers in einer ersten Stellung (Dämpfungsstellung) und Figur 6b eine Draufsicht des Rotationsdämpfers in einer zweiten Stellung (Freilaufstellung) zeigt;
- **Figur 7:**: Perspektivische Darstellung eines vierten Ausführungsbeispiels des erfindungsgemäßen Rotationsdämpfers, wobei der Rotationsdämpfer in einer perspektivischen Ansicht mit einem im Aufriss dargestellten Gehäuse und abgenommenem Gehäusedeckel gezeigt ist;
- **Figur 8:**: Draufsichten auf den Rotationsdämpfer von Figur 7 bei abgenommenem Gehäusedeckel, wobei Figur 8a eine Draufsicht des Rotationsdämpfers in einer ersten Stellung (Dämpfungsstellung) und Figur 8b eine Draufsicht des Rotationsdämpfers in einer zweiten Stellung (Freilaufstellung) zeigt;

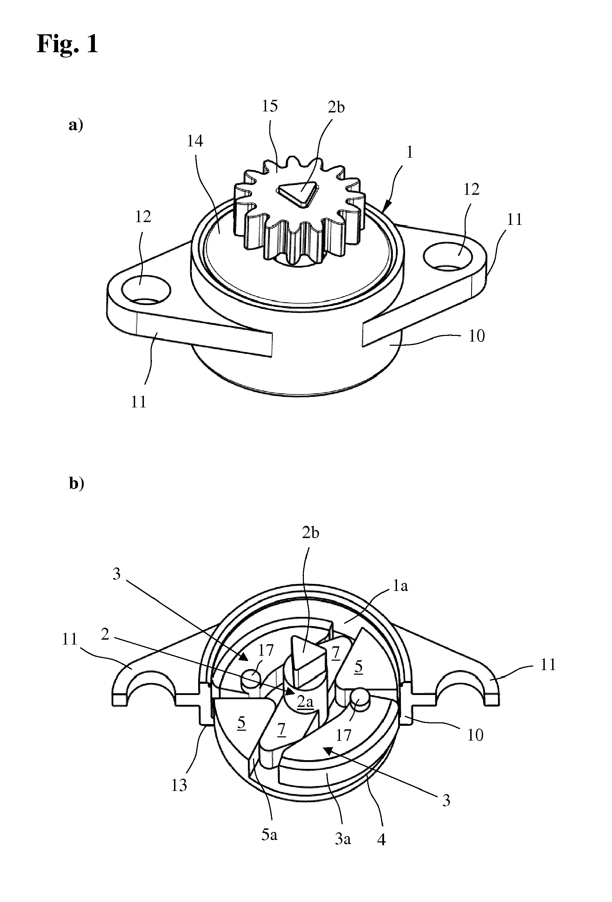

Das in Figur 1 gezeigte erste Ausführungsbeispiel des erfindungsgemäßen Rotationsdämpfers weist ein Gehäuse 1 mit einer im Wesentlichen hohlzylindrisch ausgebildeten Gehäusewand 10 auf. An der Außenseite der Gehäusewand 10 sind zweckmäßig einstückig Befestigungslaschen 11 mit Befestigungsbohrungen 12 angeformt. Über die Befestigungslaschen 11 ist das Gehäuse 1 an einem feststehenden Teil befestigbar, beispielsweise an einer Innenfläche eines Handschuhkastens eines Fahrzeuges. Das Gehäuse 1 weist einen Gehäuseboden 13 auf, der zweckmäßig einstückig mit der zylindrischen Gehäusewand 10 ausgebildet ist. An der dem Gehäuseboden 13 gegenüberliegenden Oberseite ist das Gehäuse 1 durch einen abnehmbar am Gehäuse verrasteten Deckel 14 verschlossen.

Im Innern des Gehäuses 1 ist ein Rotor 2 drehbar angeordnet. Der Rotor 2 umfasst eine zylindrische Welle 2a, an der im unteren Bereich zwei in radialer Richtung nach außen vorstehende Exzenter 7 angeformt sind. An der Oberseite der zylindrischen Welle 2a ist ein im Querschnitt dreiecksförmiger Anschlussbereich 2b vorgesehen. Die Oberseite der Welle 2a und der Anschlussbereich 2b ragen durch eine Öffnung im Gehäusedeckel 14 aus dem Gehäuse 1 heraus. Am Anschlussbereich 2b des Rotors 2 ist ein Zahnrad 15 aufgesteckt (Figur 1a). Dieses Zahnrad 15 kann an eine hier zeichnerisch nicht dargestellte Zahnstange, welche mit dem in seiner Bewegung zu dämpfendem Teil verbunden ist, gekoppelt werden. Der Rotor 2 mit der zylindrischen Welle 2a, dem Anschlussbereich 2b und den beiden Exzentern 7 ist zweckmäßig einstückig als Kunststoffspritzgussteil ausgebildet. Auch das Gehäuse 1 mit dem Deckel 14 sowie der Rotor 2 können jeweils als Kunststoffspritzgussteil hergestellt werden.

Im Innern des Gehäuses 1 ist eine gegenüber dem Gehäuse drehbar gelagerte Steuerscheibe 4 angeordnet. Der Durchmesser der kreisscheibenförmigen Steuerscheibe 4 ist geringfügig kleiner als der Innendurchmesser des hohlzylindrischen Gehäuses 1, so dass sich die Steuerscheibe ohne Reibung am Innenumfang des Gehäuses 1 darin drehen kann. Die Steuerscheibe 4 liegt lose auf dem Gehäuseboden 13 auf und weist eine zentrale Bohrung auf, in welche das untere Ende der Welle 2a des Rotors 2 eingreift. Der Rotor 2 ist dadurch drehbar in der Steuerscheibe 4 gelagert. Auf ihrer Oberseite umfasst die Steuerscheibe 4 zwei Anschläge 5 mit Anschlagsflächen 5a. Auf der Oberseite der Steuerscheibe 4 sind weiterhin zwei Bremselemente 3 angeordnet. Die beiden Bremselemente 3 sind dabei beweglich auf der Steuerscheibe 4 gelagert. Hierzu sind an der Unterseite jedes Bremselementes 3 Lagerzapfen 16 vorgesehen, welche in korrespondierende Bohrungen in der Steuerscheibe 4 eingreifen. Auch an Oberseite jedes Bremselementes 3 sind Lagerzapfen 17 angeordnet, welche in Bohrungen am Gehäusedeckel 14 eingreifen. Jedes Bremselement 3 weist eine ringsegmentförmige Bremsfläche 3a auf. Die Bremselemente 3 sind so innerhalb des Gehäuses 1 angeordnet, dass ihre ringsegmentförmigen Bremsfläche 3a der Innenfläche 1a des Gehäuses gegenüber liegt. Zweckmäßig ist die Bremsfläche 3a jedes Bremselements 3 aus einem Weichkunststoff, wie zum Beispiel Polyester-Urethan-Kautschuk, Silikonkautschuk oder Chloropren-Kautschuk (Polychloropren oder Chlorpren oder Chlorbutadien-Kautschuk) ausgebildet. Zusätzlich oder alternativ hierzu kann auch die Innenfläche 1a des Gehäuses 1 aus einem solchen Weichkunststoff gebildet sein oder mit einem Überzug aus einem Weichkunststoff versehen sein.

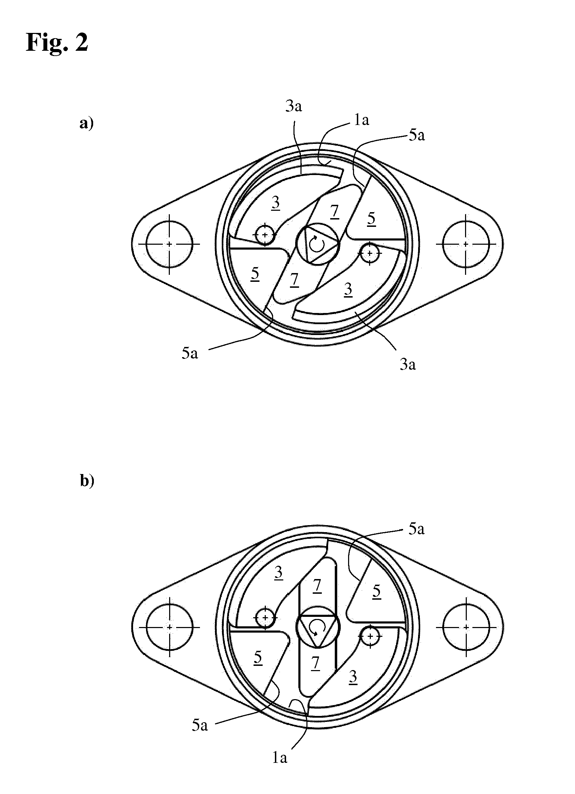

Die Funktionsweise dieses Rotationsdämpfers ist in den Figuren 2b und 2c dargestellt. Der vorbeschriebene Rotationsdämpfer verhält sich bei einer Drehung des Rotors 2 wie folgt:

Wird der Rotor wie in Figur 2b gezeigt in einer ersten Rotationsrichtung (in Figur 2b gegen den Uhrzeigersinn) gedreht, drücken die Exzenter 7 die Bremselemente 3 gegen die Innenfläche 1a des Gehäuses. Um einen möglichst guten Anpressdruck zu erzeugen sind die radial äußeren Stirnflächen der Exzenter 7 abgewinkelt und korrespondierend zur Innenfläche der Bremselemente 3 ausgebildet. Durch die Drehung des Rotors 2 in der ersten Rotationsrichtung entgegen dem Uhrzeigersinn werden die Bremselemente 3 durch den Rotor 2 und insbesondere durch die an der Welle 2a des Rotors angeordneten Exzenter 7 in ihre Dämpfungsstellung verschoben, in der die Bremsflächen 3a der Bremselemente 3 gegen die Innenfläche 1a des Gehäuses 1 gepresst werden. In dieser Dämpfungsstellung erzeugen die Bremselemente 3 ein Bremsmoment, welches auf den Rotor 2 übertragen wird und dessen Drehbewegung dämpft.

Bei einer Drehung des Rotors 2 in der entgegengesetzten Rotationsrichtung (in Figur 2a in Richtung des Uhrzeigersinns) schlagen die Exzenter 7 an den Anschlagflächen 5a der Anschläge 5 an. Dadurch wird die Drehbewegung des Rotors 2 von den Exzentern 7 über die Anschläge 5 auf die Steuerscheibe 4 übertragen und die Steuerscheibe 4 dreht sich mit dem Rotor 2 frei (d.h. ohne Bremswirkung) gegenüber dem Gehäuse 1. In dieser Stellung befinden sich die Bremselemente 3 in ihrer Freilaufstellung, in der die Bremsflächen 3a außer Eingriff stehen mit der Innfläche 1a des Gehäuses. Dies wird dadurch bewirkt, dass sich die beweglich auf der Steuerscheibe 4 gelagerten Bremselemente 3 radial nach innen bewegen können, bis die radiale Innenseite der Bremselemente 3 an der äußeren Stirnseite der Exzenter 7 anschlägt (wie in Figur 2a gezeigt). Da die Bremselemente 3 in dieser Freilaufstellung keinen oder einen nur sehr kleinflächigen Kontakt mit der Innenfläche 1a des Gehäuses aufweisen, können sich der Rotor 2 und die Steuerscheibe 4 weitgehend ungebremst relativ zum Gehäuse 1 drehen.

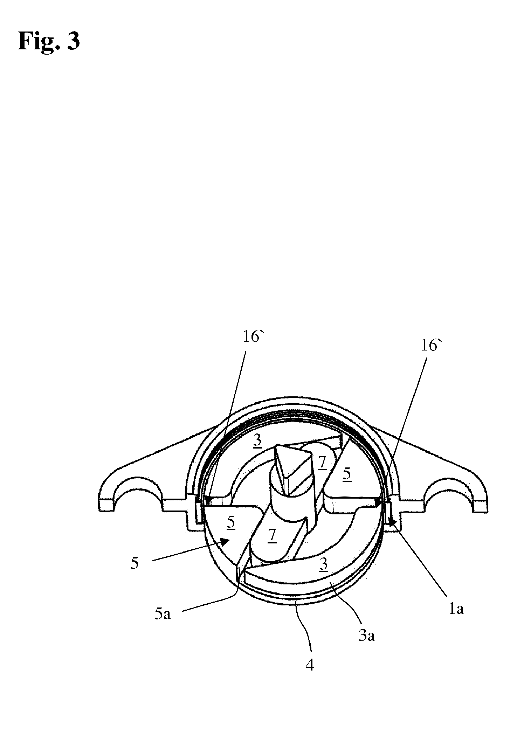

In Figur 3 ist ein zweites Ausführungsbeispiel des erfindungsgemäßen Rotationsdämpfers dargestellt. Dieses Ausführungsbeispiel unterscheidet sich von dem Ausführungsbeispiel von Figur 1 lediglich durch die Ausbildung und die Lagerung der Bremselemente 3 auf der Steuerscheibe 4. Sich entsprechende Teile sind bei dem Ausführungsbeispiel von Figur 3 mit denselben Bezugszeichen versehen wie in Figur 1.

Anders als bei dem Ausführungsbeispiel von Figur 1 sind die Bremselemente 3 bei dem Ausführungsbeispiel der Figur 3 nicht über Lagerzapfen auf der Steuerscheibe 4 gelagert, sondern durch ein federelastisches Filmscharnier 16'. Dieses Filmscharnier 16' ist zwischen jedem Anschlag 5, der auf der Steuerscheibe 4 ausgebildet ist, und einem dem Anschlag 5 benachbarten Bremselement 3 ausgebildet. Durch die federelastischen Filmscharniere 16' ist jedes Bremselement 3 federelastisch an einem Anschlag 5 angeformt und federelastisch gegenüber der Steuerscheibe 4 beweglich. Insbesondere kann jedes Bremselement 3 durch die federelastische Verbindung über das Filmscharnier 16' in radialer Richtung gegenüber der Steuerscheibe 4 verschoben werden.

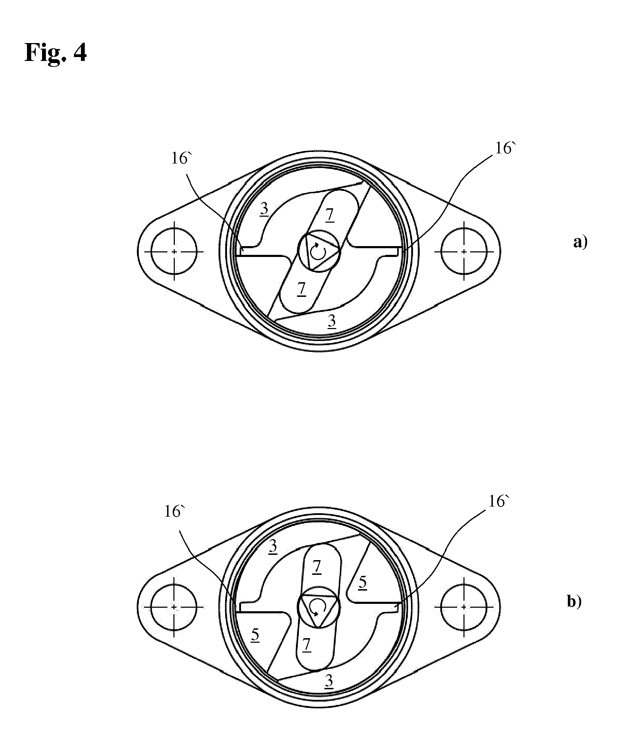

Bei einer Drehung des Rotors 2 entgegen dem Uhrzeigersinn (Figur 4b) drückt die radial äußere Stirnfläche jedes Exzenters 7 ein ihr zugeordnetes Bremselement 3 radial nach außen entgegen der Rückstellkraft des federelastischen Filmscharniers 16' und presst die Bremsfläche 3a des Bremselements 3 gegen die Innenfläche 1a des Gehäuses 1. Dadurch wird jedes Bremselement 3 in seine Dämpfungsstellung verschoben, in der es aufgrund der Reibung seiner Bremsfläche 3a an der Innfläche 1a ein Bremsmoment erzeugt, welches die Drehung des Rotors 2 gegenüber dem Gehäuse 1 dämpft.

Bei einer Drehung des Rotors 2 in entgegengesetzter Richtung (also im Uhrzeigersinn, wie in Figur 4a dargestellt) kommen die Exzenter 7 in Anschlag an die Anschlagfläche 5a der Anschläge 5 und ermöglichen gleichzeitig den Bremselementen 3 sich auf und bezüglich der Steuerscheibe 4 radial nach innen zu bewegen. Diese Bewegung wird durch die Rückstellkraft der federelastischen Verbindung über das Filmscharnier 16' unterstützt. Die Bremselemente 3 bewegen sich dadurch in ihre Freilaufstellung, in der sie außer Eingriff mit der Innenfläche 1a des Gehäuses 1 stehen.

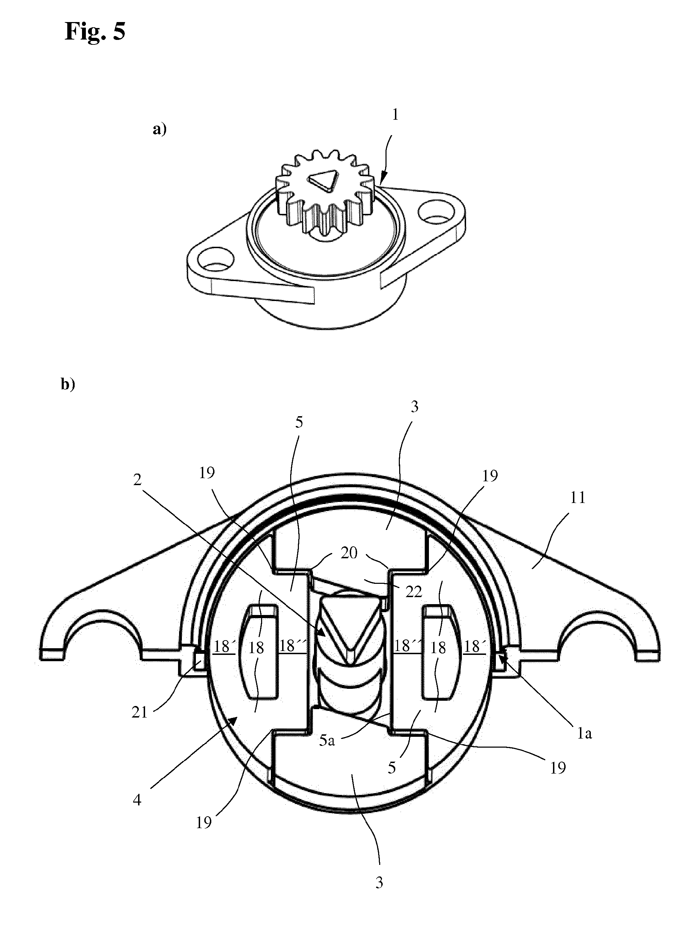

In Figur 5 ist ein drittes Ausführungsbeispiels des erfindungsgemäßen Rotationsdämpfers dargestellt, welches sich ebenfalls im Wesentlichen von dem Ausführungsbeispiel von Figur 1 durch die Ausbildung der Bremselemente 3 und deren Lagerung auf der Steuerscheibe 4 unterscheidet. Auch bei diesem Ausführungsbeispiel sind die sich entsprechenden Teile mit denselben Bezugsziffern versehen, die in den Ausführungsbeispielen der Figuren 1 und 3 verwendet worden sind.

Anders als bei den Ausführungsbeispielen der Figuren 1 und 3 sind die Bremselemente bei dem Ausführungsbeispiel von Figur 5 auf der Steuerscheibe 4 schwimmend, d.h. frei beweglich gelagert. Hierfür weist die Steuerscheibe 4 an ihrer Oberseite überstehende Lagerwandungen 18 auf. Die Lagerwandungen 18 umfassen zwei ringsegmentförmige Abschnitte 18' welche an diametral gegenüberliegenden Stellen angeordnet sind und sich über einen Winkelbereich von ca. 120° erstrecken. Der Außenumfang der ringsegmentförmigen Abschnitte 18' schließt bündig mit dem Außenumfang der kreisförmigen Steuerscheibe 4 ab. Jedem dieser ringsegmentförmigen Abschnitte 18' liegt ein linearer Abschnitt 18" gegenüber. Die linearen Abschnitte 18" sind im Abstand zum Mittelpunkt der kreisförmigen Steuerscheibe 4 und parallel zu einander verlaufend auf der Steuerscheibe 4 angeordnet. Die linearen Abschnitte 18" bilden Anschläge 5 mit Anschlagsflächen 5a. Im Übergangsbereich zwischen jedem linearen Bereich 18" und dem zugeordneten ringsegmentförmigen Abschnitt 18' ist ein Absatz 19 ausgebildet. Jeder Absatz 19 bildet eine Aufnahme für ein Bremselement 3. Die Bremselemente 3 sind schwimmend auf der Steuerscheibe 4 gelagert und so angeordnet, dass ihre radial äußere Bremsfläche 3a der Innenfläche 1a des Gehäuses 1 gegenüberliegt. An der der Bremsfläche 3a gegenüberliegenden Seite weist jedes Bremselement 3 Lagerflächen 20 auf, welche an den Absätzen 19 der Lagerwandungen 18 zur Anlage kommen. Zwischen den Lagerflächen 20 ist ein keilförmig abgeschrägter Abschnitt 22 angeordnet. Jedes Bremselement 3 ist dabei in radialer Richtung gegenüber der Steuerscheibe 4 zwischen zwei Grenzstellungen verschiebbar. In der äußeren Grenzstellung liegt die radial äußere Bremsfläche 3a jedes Bremselements an der Innenfläche 1a des Gehäuses 1 an, welche mit einem Überzug 21 aus einem abriebfesten Weichkunststoff oder einem Gummimaterial versehen ist. In der inneren Grenzstellung liegen die Lagerflächen 20 jedes Bremselements an den Absätzen 19 der Lagerwandungen 18 an. Zwischen diesen beiden Grenzstellungen ist jedes Bremselement 3 auf und gegenüber der Steuerscheibe 4 frei verschiebbar.

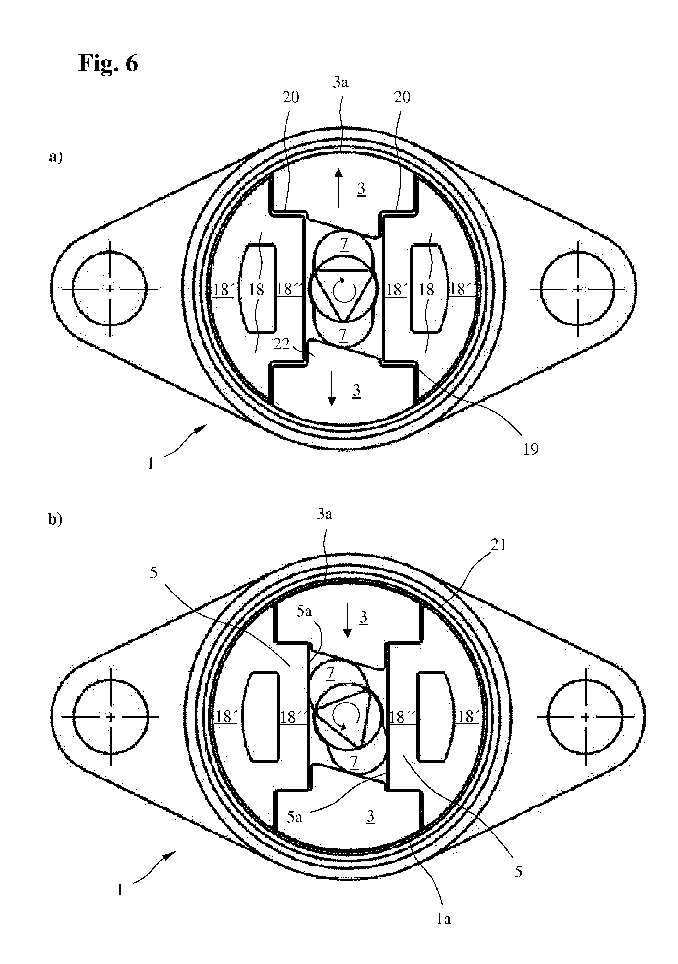

Die Funktionsweise dieser Ausführungsform des erfindungsgemäßen Rotationsdämpfers ist in den Figuren 6a und 6b dargestellt.

Wird der Rotor 2, wie in Figur 6a gezeigt, in Richtung des Uhrzeigersinns gedreht, drücken die Exzenter 7 die Bremselemente 3 radial nach außen in ihre äußere Grenzstellung, indem die radial äußere Stirnfläche der Exzenter 7 gegen den keilförmigen Abschnitt 22 der Bremselemente 3 gedrückt wird. Durch die Drehung des Rotors 2 in Richtung des Uhrzeigersinns werden die Bremselements 3 in die Dämpfungsstellung gebracht, in der die Bremsflächen 3a gegen die Innenfläche 1a des Gehäuses 1 gepresst werden, wodurch aufgrund der Reibung der Bremsfläche 3a an der Innenfläche 1a des Gehäuses 1 ein Bremsmoment erzeugt wird, welches die Rotationsbewegung des Rotors 2 in Richtung des Uhrzeigersinns dämpft.

Wird der Rotor 2 in entgegengesetzter Richtung, also entgegen dem Uhrzeigersinn, gedreht, wie in Figur 6b gezeigt, schlagen die Exzenter 7 an den Anschlagflächen 5a des Anschlags 5 an. Die Anschlagflächen 5a werden dabei von den Flächen des linearen Abschnitts 18" der Lagerwandung 18 gebildet, welche dem Mittelpunkt der Steuerscheibe 4 am nächsten liegen. In dieser Stellung der Exzenter 7 können sich die Bremselemente 3 in radialer Richtung auf der Steuerscheibe 4 in ihre innere Grenzstellung bewegen, in der die Bremsflächen 3a der Bremselemente 3 außer Eingriff mit der Innfläche 1a des Gehäuses 1 stehen. In dieser Freilaufstellung der Bremselemente 3 kann sich der Rotor 2 und mit diesem die Steuerscheibe 4 frei und im Wesentlichen ungebremst gegenüber dem Gehäuse 1 drehen.

Bei dem Ausführungsbeispiel der Figuren 5 und 6 hängt die auf den Rotor 2 übertragene Bremskraft von dem auf den Rotor 2 wirkenden Drehmoment ab: Je höher das Drehmoment, desto größer ist auch die Bremskraft, welche die Drehung des Rotors 2 gegenüber dem Gehäuse 1 bremst.

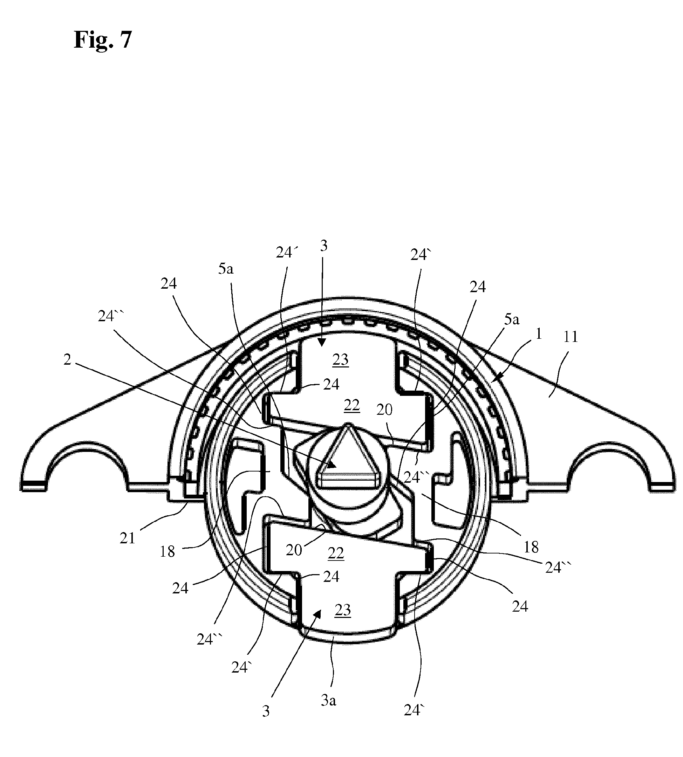

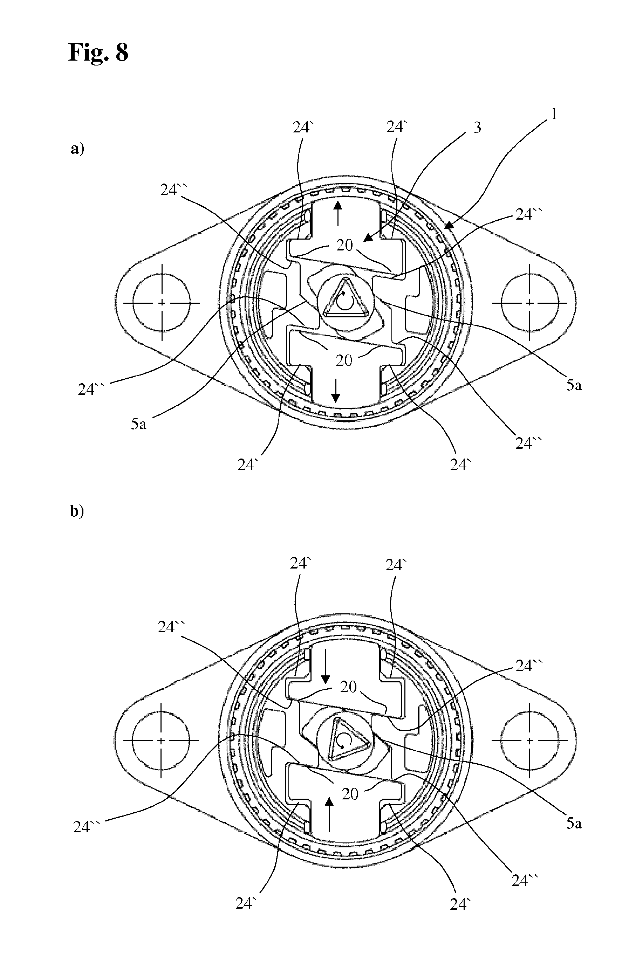

Um die Bremskraft auf einen Maximalwert zu begrenzen ist ein weiteres, in den Figuren 7 und 8 gezeigtes Ausführungsbeispiel vorgesehen, welches gegenüber dem Ausführungsbeispiel der Figuren 5 und 6 leicht abgewandelt ist. In dem Ausführungsbeispiel der Figuren 7 und 8 ist jedes Bremselement 3 ebenso wie bei dem Ausführungsbeispiel der Figuren 5 und 6 schwimmend auf der Steuerscheibe 4 gelagert und in radialer Richtung zwischen einer inneren Grenzstellung und einer äußeren Grenzstellung verschiebbar. Anders als bei dem Ausführungsbeispiel der Figuren 5 und 6 ist bei dem Ausführungsbeispiel der Figuren 7 und 8 sowohl für die innere Grenzstellung als auch für die äußere Grenzstellung ein Anschlag an der Steuerscheibe 4 vorgesehen, der eine weitere Verschiebung des Bremselements 3 gegenüber der Steuerscheibe 4 in radialer Richtung über die jeweilige Grenzstellung hinaus blockiert.

In dem Ausführungsbeispiel der Figuren 7 und 8 weist jedes Bremselement 3 einen keilförmigen Abschnitt 22 und einen sich daran in radialer Richtung nach außen erstreckenden Abschnitt 23 auf, der im Vergleich zum keilförmigen Abschnitt 22 eine (in Umfangsrichtung) geringere Breite aufweist und an seinem radial äußeren Ende eine Bremsfläche 3a aufweist. Im Übergangsbereich zwischen dem keilförmigen Abschnitt 22 und dem Abschnitt 23 ist jeweils eine Stufe 24 ausgebildet.

An der Oberseite der Steuerscheibe 4 sind wiederum an diametral gegenüberliegenden Stellen Lagerwandungen 18 ausgebildet. Diese bilden zum einen eine Lagerung für die Bremselemente 3 und zum anderen Anschlagflächen 5a, 5b für die Exzenter 7 des Rotors 2. Zur Lagerung der Bremselemente 3 sind in den Lagerwandungen 18 Ausnehmungen 24 vorgesehen, in welche die keilförmigen Abschnitte 22 der Bremselemente mit Spiel eingreifen. Die Dimensionierung dieser Ausnehmungen 24 ist den keilförmigen Abschnitten 22 so angepasst, dass diese in den Ausnehmungen in radialer Richtung zwischen einer inneren Grenzstellung und einer äußeren Grenzstellung verschiebbar sind, wobei sie in ihrer inneren Grenzstellung an der das radial innere Ende der Ausnehmungen 24 begrenzenden Wandung 24' und in ihrer äußeren Grenzstellung an der das radial äußere Ende der Ausnehmungen 24 begrenzenden Wandung 24" anschlagen, wodurch eine weitere Verschiebung über die jeweilige Grenzstellung hinaus blockiert wird. Wird der Rotor 2 in der ersten Rotationsrichtung gegenüber dem Gehäuse 1 gedreht, wie in Figur 8a gezeigt, werden die Bremselemente 3 in ihre äußere Grenzstellung verschoben. In dieser äußeren Grenzstellung liegen die Bremsflächen 3a an der Innenfläche 1a des Gehäuses 1 an, welche zweckmäßig wiederum mit einem Überzug 21 aus einem abriebfesten Weichkunststoff oder Gummi versehen ist, und erzeugen durch die Reibung zwischen der Bremsfläche 3a und der Innenfläche 1a ein Bremsmoment (Figur 8 a). Weil die Bremselemente 3 bei diesem Ausführungsbeispiel in radialer Richtung nicht über ihre äußere Grenzstellung hinaus verschoben werden können, ist die Bremskraft auf einen Maximalwert begrenzt, unabhängig von dem auf den Rotor 2 einwirkenden Drehmoment. In diesem Ausführungsbeispiel der Erfindung kann die Bremskraft durch entsprechende Dimensionierung der Ausnehmungen 24 und der darin eingreifenden Bremselemente 3 auf einen gewünschten Maximalwert begrenzt werden. Es ist hierbei auch möglich bspw. durch Austausch der Bremselemente 3 gegen solche mit anderen Außenabmessungen die Bremskraft nachträglich auf einen anderen Maximalwert zu begrenzen.

Wird der Rotor 2 in entgegengesetzter Rotationsrichtung gegenüber dem Gehäuse 1 gedreht, kommen die Exzenter 7 des Rotors 2 in Anlage an die Anschlagflächen 5a an den Lagerwandungen 18 und die Bremselemente 3 können sich in radialer Richtung nach innen in ihre innere Grenzstellung bewegen, in der die Lagerflächen 20 der Bremselemente an der radial inneren Wandung 24" der Lagerwandungen 18 anliegen. Die Bremsflächen 3a liegen dann nicht mehr an der Innenfläche 1a des Gehäuses 1 an, weshalb kein Bremsmoment erzeugt wird und sich der Rotationsdämpfer im Freilauf befindet (Figur 8 b).

## Patentansprüche

1. Rotationsdämpfer mit Freilauf, umfassend ein Gehäuse (1) mit einer Innenfläche (1a), einen im Gehäuse drehbar angeordneten Rotor (2) und wenigstens ein Bremselement (3), welches bei einer Drehung des Rotors (2) in einer ersten Rotationsrichtung in Anlage an die Innenfläche (1a) des Gehäuses (1) kommt um ein auf den Rotor (2) wirkendes Bremsmoment zu erzeugen und bei einer Drehung des Rotors (2) in der entgegengesetzten Rotationsrichtung in eine Freilaufstellung gebracht wird, in der sich der Rotor (2) im Wesentlichen ohne Einwirkung eines Bremsmoments frei drehen kann, **dadurch gekennzeichnet, dass** das oder jedes Bremselement (3) auf oder an einer drehbar im Gehäuse (1) angeordneten Steuerscheibe (4) beweglich gelagert oder angeordnet ist und bei einer Drehung des Rotors (2) in der ersten Rotationsrichtung von diesem zur Erzeugung des Bremsmoments gegen die Innenfläche (1a) des Gehäuses (1) gepresst wird.

2. Rotationsdämpfer nach Anspruch 1, **dadurch gekennzeichnet, dass** der Rotor (2) in oder an der Steuerscheibe (4) drehbar gelagert ist.

3. Rotationsdämpfer nach Anspruch 2, **dadurch gekennzeichnet, dass** die Steuerscheibe (4) einen Anschlag (5) zur Begrenzung der Drehbewegung des Rotors (2) gegenüber der Steuerscheibe (4) aufweist.

4. Rotationsdämpfer nach Anspruch 3, **dadurch gekennzeichnet, dass** bei einer Drehung des Rotors (2) in der entgegengesetzten Rotationsrichtung der Rotor (2) am Anschlag (5) anschlägt und dabei das oder jedes Bremselement (3) in seine Freilaufstellung gebracht wird, in der es außer Eingriff mit der der Innenfläche (1a) des Gehäuses (1) steht.

5. Rotationsdämpfer nach einem der voranstehenden Ansprüche, **dadurch gekennzeichnet, dass** das oder jedes Bremselement (3) um eine Drehachse (6) drehbar auf der Steuerscheibe (4) gelagert und dadurch insbesondere in radialer Richtung gegenüber der Steuerscheibe verschwenkbar ist.

6. Rotationsdämpfer nach einem der voranstehenden Ansprüche, **dadurch gekennzeichnet, dass** das oder jedes Bremselement (3) federelastisch an der Steuerscheibe (4) angelenkt oder einstückig angeformt und dadurch elastisch und insbesondere in radialer Richtung gegenüber der Steuerscheibe beweglich ist.

7. Rotationsdämpfer nach einem der voranstehenden Ansprüche, **dadurch gekennzeichnet, dass** das oder jedes Bremselement (3) in radialer Richtung frei beweglich an oder auf der Steuerscheibe (4) schwimmend gelagert ist.

8. Rotationsdämpfer nach einem der voranstehenden Ansprüche, **dadurch gekennzeichnet, dass** an dem Rotor (2) wenigstens ein Exzenter (7) angeformt ist, der das oder jedes Bremselement (3) bei einer Drehung des Rotors (2) in der ersten Rotationsrichtung gegen die Innenfläche (1a) des Gehäuses (1) presst.

9. Rotationsdämpfer nach einem der voranstehenden Ansprüche, **dadurch gekennzeichnet, dass** das oder jedes Bremselement (3) eine aus einem Weichkunststoff gebildete Bremsfläche (3a) aufweist und/oder dass die Innenfläche (1a) des Gehäuses (1) aus einem Weichkunststoff gebildet ist.

10. Rotationsdämpfer nach einem der voranstehenden Ansprüche, **dadurch gekennzeichnet, dass** sich das oder jedes Bremselement (3) bei einer Drehung des Rotors (2) in der ersten Rotationsrichtung in einer Dämpfungsstellung befindet, in der das Bremselement (3) in Kontakt mit der Innenfläche (1a) des Gehäuses (1) steht und dass das Bremselement (3) bei Drehung des Rotors (2) in der entgegengesetzten Rotationsrichtung selbsttätig in seine Freilaufstellung verschoben wird, in der das Bremselement (3) außer Eingriff mit der Innenfläche (1a) des Gehäuses (1) steht.

11. Rotationsdämpfer nach Anspruch 6, **dadurch gekennzeichnet, dass** die Bewegung des oder jedes Bremselements (3) von der Dämpfungsstellung in die Freilaufstellung von der Rückstellkraft der federelastischen Verbindung des Bremselements (3) an der Steuerscheibe (4) bewirkt wird.

12. Rotationsdämpfer nach einem der voranstehenden Ansprüche, **dadurch gekennzeichnet, dass** das Gehäuse (1) eine zylindrische Gehäusewand (10) umfasst, deren Innenumfang die Innenfläche (1a) bildet.

13. Rotationsdämpfer nach einem der voranstehenden Ansprüche, **dadurch gekennzeichnet, dass** das oder jedes Bremselement (3) auf der Steuerscheibe (4) und in radialer Richtung gegenüber dieser beweglich gelagert ist.
